# EUROPEAN PATENT APPLICATION

(11) **EP 4 710 745 A1**
(43) Date of publication of application: **18.03.2026**
(21) Application number: 25199610.4
(22) Date of filing: 02.09.2025
(51) Int. Cl.: A01C 1/08

(54) **DEVICE FOR THERMAL SANITATION OF SEED STOCKS**

(30) Priority: 13.09.2024 CZ 202442229 U
(71) Applicant: Seed Service s.r.o., 56601 Vysoke Myto (CZ); Vysoké Uceni Technické V Brne, 60200 Brno (CZ); Zemedelsky vyzkum, spol. s r.o., 66441 Troubsko (CZ)
(72) Inventor: Zavrel, Oldrich, Vaclavske Predmesti (CZ); Skryja, Pavel, Rybne (CZ); Nedelnik, Jan, Brno (CZ); Bojanovsky, Jiri, Brno (CZ); Brummer, Vladimir, Orechov (CZ); Jurena, Tomas, Doubravice nad Svitavou (CZ); Pernica, Marek, Brno (CZ); Drda, Antonin, Bruntal (CZ)
(74) Representative: Malusek, Jiri

(57) **Abstract**

Device for thermal sanitation of seed stocks, which comprises a sanitation space (5) and a section (11) for preparing a sanitation mixing medium, wherein the sanitation space (5) comprises at least one sanitation pipe (7), into which in its upper part an inlet (6) of the seed stock is arranged, wherein an end zone (9) is arranged at the bottom of the sanitation pipe (7), wherein the section (11) for preparing the sanitation mixing medium comprises a combustion chamber (2), which is provided at the inlet with a burner (1) for gaseous fuel, and further is provided with at least one nozzle (3) for spraying water from the inlet (10) for creating steam and to feed it into the flue gas stream from the burner (1), wherein downstream of the combustion chamber (2) a mixing section (4) for creating a perfect mixture of steam with the flue gas is arranged, the end of mixing section (4) mouths to a distributor (8) of the sanitation mixture medium with at least one outlet interconnecting of the section (11) with the sanitation space (5).

## Description

### Technical field

The invention concerns a device for thermal sanitation of seed stocks.

### State of the art

Currently there is a shift in organic farming away from use of pesticides and chemicals in general for seed stocks treatment. The current form of seed stocks treatment is pickling, where the seed stocks are treated in a water solution of a pickling agent. Pickling process contains besides of chemical treatment also soaking of seeds and it is necessary to dry it again which is very energy demanding.

The aim of the invention is to present a device for thermal sanitation of seed stocks that would allow a cheap, reliable and user-friendly alternative treatment of seed stocks by physical means.

### Summary of the invention

The above mentioned shortcomings are eliminated by the thermal seed sanitation device, which comprises a sanitation space and a section for preparing a sanitation mixing medium, wherein the sanitation space comprises at least one sanitation pipe, into which in its upper part an inlet of the seed stock is arranged, wherein an end zone is arranged at the bottom of the sanitation pipe, wherein the section for preparing the sanitation mixing medium comprises a combustion chamber, which is provided at the inlet with a burner for gaseous fuel, and further is provided with at least one nozzle for spraying water from the inlet for creating steam and to feed it into the flue gas stream from the burner, wherein downstream of the combustion chamber a mixing section for creating a perfect mixture of steam with the flue gas is arranged, the end of mixing section mouths to a distributor of the sanitation mixture medium with at least one outlet interconnecting of the section with the sanitation space.

In a preferred embodiment, the distributor is provided with a plurality of outlets to allow modular connection of a plurality of sanitation pipes and seed stock inlets within the sanitation space for different required capacity of the device.

In a further preferred embodiment, the mixing section is provided with internal turbulence enhancing elements.

### Brief description of drawings

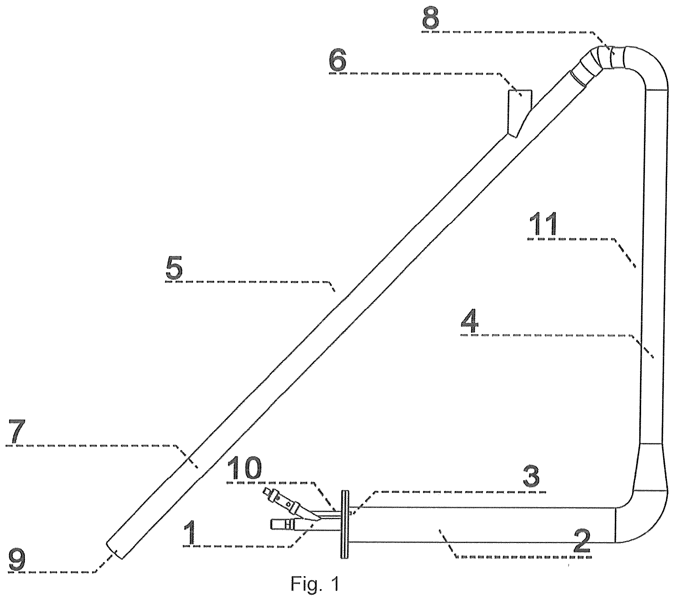

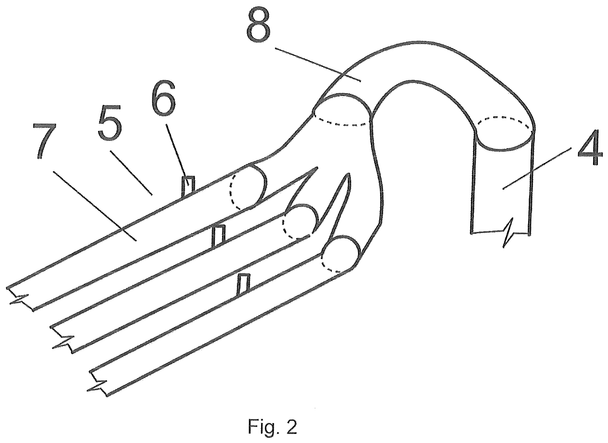

The invention will be now explained by means of drawings, in which Fig. 1 is a scheme of a device for thermal sanitation of seed stocks according to the invention and Fig. 2 is a sanitation space formed by a set of several sanitation pipes arranged side by side.

### Preferred embodiments of the invention

The device for thermal sanitation of seed stocks is shown in Fig. 1. The main part is a sanitation space 5, where the actual sanitation of seed stock takes place. The sanitation space 5 comprises an inclined sanitation pipe 7 with a high inclination respecting the pouring angle of seed stock to be treated in order to prevent unwanted accumulation of seed stock in the sanitation space 5. The required residence time is achieved by a combination of selection of suitable length of the sanitation space 5 and adjusting the inclination of the sanitation pipe 7. In the upper part of the sanitation space 5 a seed stock inlet 6 is arranged. Feeding of seed stock is continuous. In the lower part of the sanitation pipe 7 an end zone 9 is arranged.

For the description of the rest of the construction it is important to describe the path of the sanitation mixed medium, that is, the flue gases of gaseous fuels enriched with water steam. Another part of the device is a section 11 for preparation of the sanitation mixed medium. This section 11 comprises a combustion chamber 2 which is provided at the inlet with a fuel burner 1 for a gaseous fuel such as natural gas or propane butane. The combustion chamber 2 is further provided at the inlet end with a nozzle 3 or with a plurality of nozzles 3 for spraying water through the inlet 10 into the combustion chamber 2, for creating steam. Downstream of the combustion chamber 2, a mixing section 4 is provided for creating a perfect mixture of steam and flue gas. The mixing section 4 mouths into a distributor 8 of the sanitation mixing medium, which allows a modular solution for different desired capacities of the target device. The capacity is determined by the number of sanitation pipes 7. In the exemplary embodiment presented, it is assumed that the sanitation space 5 is formed by a system of multiple sanitation pipes 7 arranged side by side.

In a preferred embodiment, the mixing section 4 is provided with internal turbulence enhancing elements such as partial baffles, inclined vanes, etc.

At the end zone 9 of the sanitation pipe 7 of the sanitation space 5, seeds must be cooled to prevent condensation of the sanitation mixing medium on the surface of seed stock and its subsequent deterioration.

Achieving the necessary sanitation effect is possible by the choice of appropriate conditions in the sanitation device, such as residence time, temperature of the sanitation medium, the proportion of steam in the sanitation medium and the proportion of seed stock to sanitation medium.

A functional industrial plant must include other auxilliary peripheral equipment such as seed hoppers at the inlet and outlet of the plant (e.g. bigbags), seed dosing equipment in the form of a hopper, seed cooling equipment and, where appropriate, seed inoculation equipment at the end. These peripheral devices constitute a commonly used technical solutions suitable for seed stocks and are not the subject of the invention.

The present device provides a low-cost, reliable and user-friendly alternative treatment of seed stocks or grains by physical means. The main potential use of the device is in the treatment of seed stocks and other materials for agricultural, food and feed purposes. The invention under consideration allows low operating costs per treated quantity of seed stock.

## Claims

1. Device for thermal sanitation of seed stocks, **characterized in that** it comprises a sanitation space (5) and a section (11) for preparing a sanitation mixing medium, wherein the sanitation space (5) comprises at least one sanitation pipe (7), into which in its upper part an inlet (6) of the seed stock is arranged, wherein an end zone (9) is arranged at the bottom of the sanitation pipe (7), wherein the section (11) for preparing the sanitation mixing medium comprises a combustion chamber (2), which is provided at the inlet with a burner (1) for gaseous fuel, and further is provided with at least one nozzle (3) for spraying water from the inlet (10) for creating steam and to feed it into the flue gas stream from the burner (1), wherein downstream of the combustion chamber (2) a mixing section (4) for creating a perfect mixture of steam with the flue gas is arranged, the end of mixing section (4) mouths to a distributor (8) of the sanitation mixture medium with at least one outlet interconnecting of the section (11) with the sanitation space (5).

2. Device for thermal sanitation of seed stocks according to claim 1, **characterized in that** the distributor (8) is provided with a plurality of outlets to allow modular connection of a plurality of sanitation pipes (7) and seed stock inlets (6) within the sanitation space (5) for different required capacity of the device.

3. Device for thermal sanitation of seed stocks according to claim 1, **characterized in that** the mixing section (4) is provided with internal turbulence enhancing elements.
